# EUROPEAN PATENT APPLICATION

(11) **EP 4 123 793 A1**
(43) Date of publication of application: **25.01.2023**
(21) Application number: 21187388.0
(22) Date of filing: 23.07.2021
(51) Int. Cl.: H01M 50/107, H01M 50/249, H01M 50/505, H01M 50/507, H01M 50/512, H01M 50/514, H01M 50/559

(54) **A BATTERY MODULE, A BATTERY PACK, AN ELECTRIC VEHICLE, AND A METHOD OF MOUNTING A BATTERY MODULE**

(71) Applicant: Samsung SDI Co., Ltd., Yongin-si, Gyeonggi-do 17084 (KR)
(72) Inventor: Nemes, Marton, 8054 Seiersberg-Pirka (AT)
(74) Representative: Gulde & Partner

(57) **Abstract**

The present disclosure refers to a battery module (12) for an electric vehicle (300), comprising: a plurality of secondary battery cells (20), at least one positive current collector structure (28), and at least one negative current collector structure (29a, 29b); wherein each of the secondary battery cells (20) comprises an electrode assembly including a positive electrode, a negative electrode, and a separator interposed between the positive electrode and the negative electrode, a positive terminal (25) electrically connected to the positive electrode, a negative terminal (23) electrically connected to the negative electrode, and a case (27) receiving the electrode assembly; wherein the at least one positive current collector structure (28) is arranged to interconnect the positive terminals (25) of at least two of the plurality of secondary battery cells (20) with each other, and the at least one negative current collector structure (29a, 29b) is arranged to interconnect the negative terminals (23) of at least two of the plurality of secondary battery cells (20) with each other; wherein the case (27) of each of the plurality of secondary battery cells (20) comprises a groove (30), and the groove (30) comprises at least a part of the negative terminal (23) of said secondary battery cell (20); wherein the at least one negative current collector structure (29a, 29b) comprises at least one negative connection portion (31a, 31b, 31c, 31d) projecting into the groove (30) of the case (27) of one of the plurality of secondary battery cells (20) to electrically connect the negative current collector structure (29a, 29b) and the negative terminal (23) of said secondary battery cell (20); and wherein the negative connection portion (31a, 31 b, 31c, 31d) and the groove (30) are mechanically connected with each other by a first press fit connection (37), and/or the positive terminal (25) of at least one of the plurality of secondary battery cells (20) comprises a hole (36a, 36b), wherein the at least one positive current collector structure (28) comprises at least one positive connection portion (32a, 32b) projecting into said hole (36a, 36b) to electrically connect the positive current collector structure (28) and the positive terminal (25) of said secondary battery cell (20), wherein the positive connection portion (32a, 32b) and the hole (36a, 36b) are mechanically connected with each other by a second press fit connection (38).

## Description

### Field of the Disclosure

The present disclosure relates to a battery module for an electric vehicle. The present disclosure also relates to a battery pack comprising the battery module, an electric vehicle comprising the battery pack, and to a method of mounting the battery module.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case, also called can, receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery module requires appropriate mechanical connections between the individual components, e.g. of secondary battery cells, and between them and the positive current collector structure and/or the negative current collector structure. These connections must remain functional and save during the average service life of the battery system. Further, installation space requirements must be met, especially in mobile applications. The electrical connections between individual components of the battery modules, e.g. of secondary battery cells, and between them and the positive current collector structure and/or the negative current collector structure, requires reliability, low transition resistance and cost-effective mountability.

In the prior art, the connection between the positive current collector structure and/or the negative current collector structure, e.g., a busbar, and the cell are realized by well known methods, such as screwing, welding and/or bonding, in order to achieve a durable low resistance connection that is also suitable for high volume production processes. The manufacture of connections according to the prior art is based on said well known methods, especially for cell types with two dedicated separate cell poles, such as prismatic type cells or pouch type cells. However, for circular cells, wherein one pole is comprised by the circular shaped cell can, these connections are not suitable as the contact area is curved and the cell requires an accurate positioning and/or orientation for being mounted in a battery module. Furthermore, in the case of screwing, the arrangement of screws requires installation space.

CN 108666466 A discloses a battery module, comprising a positive electrode bus structure with a positive electrode contact piece, a negative bus plate and an insulation reinforcement plate there between. The negative bus plate comprises negative electrode through holes provided with a battery clamping structure including a plurality of elastic claws each. Cylindrical battery cells connected by the positive electrode bus structure and the negative bus plate comprise a concave ring groove into which the plurality of elastic claws is clamped. The positive electrode of each battery cell abuts on an elastic protrusion of the positive electrode contact piece, and presses the elastic protrusion to deform, thereby realizing the connection between the positive electrode of the cylindrical battery and the positive electrode contact piece. The battery clamping structure is clamped on the ring groove of the negative electrode of each cylindrical battery cell to attach the cell. The deformation of the elastic protrusion of the positive electrode contact piece can be restored when the cylindrical battery is pulled out.

According to CN 108666466 A, the electrical connections between the negative bus plate and the cells are realized by the elastic claws that are comprised by the negative bus plate. Thus, the manufacture of the negative bus plate and the arrangement of the battery clamping structure thereon are highly specific with respect to the arrangement of cells which makes the manufacture of the negative bus plate complex as, e.g., sheet metal needs to be stamped precisely to achieve an accurate arrangement of cells and elastic protrusions of the positive electrode contact piece. Furthermore, the elasticity of the elastic claws and protrusions can decrease in the course of time due to thermal, chemical and/or mechanical influences. A decrease of elasticity can lead to a decreasing electrical and/or mechanical connection between the cell and the positive bus structure and/or the negative bus plate.

It is thus an object of the present disclosure to overcome or reduce at least some of the drawbacks of the prior art and to provide an alternative battery module that can be effectively and cost-effectively manufactured without the need for screwing, bonding or welding to connect one or more current collector structures with one or more cells.

### Summary of Invention

Embodiments of the present disclosure seek to solve at least one of the problems existing in the prior art to at least some extent. In particular, a battery module for an electric vehicle is provided, comprising: a plurality of secondary battery cells, at least one positive current collector structure, and at least one negative current collector structure; wherein each of the secondary battery cells comprises an electrode assembly including a positive electrode, a negative electrode, and a separator interposed between the positive electrode and the negative electrode, a positive terminal electrically connected to the positive electrode, a negative terminal electrically connected to the negative electrode, and a case receiving the electrode assembly; wherein the at least one positive current collector structure is arranged to interconnect the positive terminals of at least two of the plurality of secondary battery cells with each other, and the at least one negative current collector structure is arranged to interconnect the negative terminals of at least two of the plurality of secondary battery cells with each other; wherein the case of each of the plurality of secondary battery cells comprises a groove, and the groove comprises at least a part of the negative terminal of the secondary battery cell; wherein the at least one negative current collector structure comprises at least one negative connection portion projecting into the groove of the case of at least one of the plurality of secondary battery cells to electrically connect the at least one negative current collector structure and the negative terminal of the at least one of the plurality of secondary battery cells. The present disclosure also relates to a battery pack, an electric vehicle, and to a method of mounting a battery module.

According to the invention, the at least one negative connection portion and the groove are mechanically connected with each other by a first press fit connection, and/or the positive terminal of the at least one of the plurality of secondary battery cells comprises a hole, wherein the at least one positive current collector structure comprises at least one positive connection portion projecting into the hole to electrically connect the at least one positive current collector structure and the positive terminal, wherein the at least one positive connection portion and the hole are mechanically connected with each other by a second press fit connection.

In other words, the negative current collector structure and/or the positive current collector structure is connected to the cell by a press fit connection. A press fit connection is an interference fit, also called a friction fit. Therein, the negative connection portion and the groove, and/or the positive connection portion and the hole are tight fitting pair of parts that are held together by frictional forces and/or adhesive forces acting on the contact areas between said parts. I.e., a lateral measure, e.g., an area, of the cross section of the negative connection portion is dimensioned so that, when inserted into the groove, a force and/or torque is exerted between the negative connection portion and the groove so that the negative connection portion is held in place within the groove. Similarly, a lateral measure, e.g., an area, of the cross section of the positive connection portion is dimensioned so that, when inserted into the hole, a force and/or torque is exerted between the positive connection portion and the hole so that the positive connection portion is held in place within the hole. Due to the press fit connection, screwing, bonding or welding are not necessary to connect one or more current collector structures and the cell. As the negative connection portion is an element of the negative current collector structure and the positive connection portion is an element of the positive current collector structure, a reliable electrical connection between the negative and/or positive connection collector structure is achieved by the mechanical connection between the cell and the negative connection portion and/or positive connection portion. This can improve the manufacture of the battery module by reducing the number of production steps and thereby reducing the complexity and the time consumption of the manufacture of the battery module. Instead of screwing, bonding or welding, the parts of the press fit connection are joint together by pressing the negative connection portion into the groove or by pressing the positive connection portion into and/or through the hole.

In contrast to the prior art as described above according to which the above mentioned positive electrode of each battery cell abuts on an elastic protrusion of the positive electrode contact piece, the positive current collector structure and the positive terminal and thus the positive electrode are connected by the positive connection portion and the hole by a second press fit connection, i.e., the connection according to the invention is not realized by a unidirectional surface contact but by a fitting pair of parts that are held together by frictional forces.

According to another aspect of the present disclosure, a battery pack comprising a battery module as defined above is provided. As the battery modules comprises reliable mechanical and electrical connections, and can be mounted effectively, the improved connection between the cell and the one or more current collector structures improves the reliability of mechanical and electrical connections and of the efficiency of mounting of the battery pack.

According to another aspect of the present disclosure, an electric vehicle comprising a battery module as defined above is provided. As the battery modules comprises reliable mechanical and electrical connections, and can be mounted effectively, the improved connection between the cell and the one or more current collector structures improves the reliability of mechanical and electrical connections and of the efficiency of mounting of the electric vehicle.

According to another aspect of the present disclosure, methods of mounting a battery module are provided.

A method of mounting a battery module comprises providing a plurality of secondary battery cells, at least one positive current collector structure, and at least one negative current collector structure; wherein each of the secondary battery cells comprises an electrode assembly including a positive electrode, a negative electrode, and a separator interposed between the positive electrode and the negative electrode, a positive terminal electrically connected to the positive electrode, a negative terminal electrically connected to the negative electrode, and a case receiving the electrode assembly; wherein the at least one positive current collector structure is arranged to interconnect the positive terminals of at least two of the plurality of secondary battery cells with each other, and the at least one negative current collector structure is arranged to interconnect the negative terminals of the at least two of the plurality of secondary battery cells with each other; wherein the case of each of the plurality of secondary battery cells comprises a groove, and the groove comprises at least a part of the negative terminal; and wherein the at least one negative current collector structure comprises at least one negative connection portion projecting into the groove to electrically connect the at least one negative current collector structure and the negative terminal. The method is characterized by mechanically connecting the at least one negative connection portion and the groove with each other by pressing the at least one negative connection portion into the groove to form a first press fit connection.

Another method of mounting a battery module according to the invention comprises providing a plurality of secondary battery cells, at least one positive current collector structure, and at least one negative current collector structure; wherein each of the secondary battery cells comprises an electrode assembly including a positive electrode, a negative electrode, and a separator interposed between the positive electrode and the negative electrode, a positive terminal electrically connected to the positive electrode, a negative terminal electrically connected to the negative electrode, and a case receiving the electrode assembly; wherein the at least one positive current collector structure is arranged to interconnect the positive terminals of at least two of the plurality of secondary battery cells with each other, and the at least one negative current collector structure is arranged to interconnect the negative terminals of the at least two of the plurality of secondary battery cells with each other; wherein the case of each of the plurality of secondary battery cells comprises a groove, and the groove comprises at least a part of the negative terminal; wherein the at least one negative current collector structure comprises at least one negative connection portion projecting into the groove to electrically connect the at least one negative current collector structure and the negative terminal, and wherein the positive terminal comprises a hole, wherein the at least one positive current collector structure comprises at least one positive connection portion projecting into the hole to electrically connect the at least one positive current collector structure and the positive terminal. The method is characterized by mechanically connecting the at least one positive connection portion and the hole with each other by pressing the at least one positive connection portion into and/or through the hole to form a second press fit connection.

In other words, the methods are characterized by forming a press fit connection between a current collector structure and a secondary battery cell by pressing a negative connection portion into a groove or by pressing a positive connection portion into and/or through a hole. Both methods can be combined to provide a method of mounting a battery module, wherein a first press fit connection is formed by mechanically connecting the negative connection portion and the groove with each other by pressing the negative connection portion into the groove, and wherein a second press fit connection is formed by mechanically connecting the positive connection portion and the hole with each other by pressing the positive connection portion into and/or through the hole to form a second press fit connection. Each of the methods achieve an efficient mounting of a battery module with reliable mechanical and electrical connections between the cell and the negative current collector structure and/or the positive current collector structure. The combination of the methods further enhances the efficiency of mounting the battery module.

Further aspects of the present disclosure could be learned from the dependent claims or the following description.

In a preferred embodiment, the groove comprises a base and a lateral surface, wherein the lateral surface comprises a protrusion, wherein the protrusion is arranged to mechanically fasten the negative connection portion within the groove to further improve the reliability of the first press fit connection. In this embodiment, the protrusion, i.e., the shoulder, provides a decrease of the cross section of the groove which can, in the mounted state, improve forces exerted between the lateral surface of the groove and the negative connection portion.

Optionally, the at least one negative connection portion and/or the groove of each of the plurality of secondary battery cells is adapted to plastically deform the at least one negative connection portion upon insertion of the at least one negative connection portion into the groove. The plastic deformation of the negative connection portion guarantees a reliable connection that is preferably based on adhesion a contact of surfaces and/or surface sections of the negative connection portion and of the groove. This leads to a reliable mechanical contact and excellent electrical contact with low contact resistance. The plastic deformation provides an irreversible first press fit connection, i.e., due to the plastic deformation of the negative connection portion and/or the groove, i.e., the case, the first press fit connection cannot be released without leaving the negative connection portion in a state in which the first press fit connection cannot be realized afterwards. Similarly, in a preferred embodiment, if present, the positive connection portion and the hole are mechanically connected with each other by a second press fit connection, wherein the at least one positive connection portion and/or the hole of each of the plurality of secondary battery cells is adapted to plastically deform the positive connection portion upon insertion of the positive connection portion into and/or through said hole. Additionally or alternatively, the hole, i.e., the positive terminal, can be deformed upon insertion of the positive connection portions into said hole.

Optionally, the case of each of the plurality of secondary battery cells has a cylindrical shape, and the groove and the negative terminal of the case are arranged along the circumference of the case. In this embodiment, the case has an axis defined by the cylindrical shape and a circumference that extends in a plane orthogonal the said axis and along the surface of said case. That is, in this embodiment, the groove is a circular groove. The circumferential arrangement of the groove and of the negative terminal guarantees that the cells can be mounted in any orientation with respect to rotation around the axis of the case of each of the cells which leads to an effective and reliable mounting of cells without the need to orient cells around their axes. This simplifies the method of mounting such a battery module by lowering the number of method steps and reducing the complexity of the method by avoiding the orientation of the cells around their axes.

Optionally, the at least one negative current collector structure comprises at least two, preferably at least four, negative connection portions per case to enhance the mechanical reliability of the connection between the current collector structure and each of the cells. Similarly, if present, the at least one positive current collector structure preferably comprises at least two positive connection portions per case.

Preferably, at least two negative connection portions per case are arranged on opposite lateral surface sections of the case. Thereby the negative connection portions of the preferably at least partially rigid negative current collector structure can improve the mechanical integration of the battery cells within the battery module.

Optionally, the battery module comprises two negative current collector structures, wherein each of the negative current collector structures comprises at least one negative connection portion, and wherein the plurality of secondary battery cells is arranged between the two negative current collector structures to facilitate an efficient assembly of the battery module and achieve an improved mechanical integration of the battery cells within the battery module.

In a preferred embodiment, the plurality of secondary battery cells is linearly arranged, and each of the two negative current collector structures extend in parallel to the linearly arranged secondary battery cells to further improve the mechanical integration of the battery cells within the battery module. This embodiment is particularly space-saving and leads to a compact battery module.

Optionally, the negative connection portion and/or the at least one positive connection portion comprises at least two sub portions, wherein, in the mounted state, the subportions are pressed together to facilitate the realization of the first and/or second press fit connection, respectively.

Optionally, the negative connection portion and/or the at least one positive connection portion has an elongated shape and a non-monotonically varying cross section to improve the press fit connection. An elongated shape means that the negative connection portion and/or the positive connection portion has a length and a cross section, wherein the length is larger than the cross section. The elongated shape can facilitate the realization of a press fit connection by improving how the negative connection portion can project into the groove and/or how the positive connection portion can project into the hole. The cross section of the negative connection portion can be maximal where the negative connection portion contacts a lateral surface of the groove and smaller at a base of the groove and at an end distal to the base of the groove. If present, the cross section of the positive connection portion can be maximal where the positive connection portion contacts the hole and smaller elsewhere. Preferably, in this embodiment, the groove comprises a protrusion as described above. The non-monotonically varying cross sectional area of the negative connection portion and the protrusion can lead to a synergetically improved first press fit connection.

Advantageously, each of the positive terminals of the plurality of secondary battery cells comprises two or more holes, and the at least one positive current collector structure comprises two or more positive connection portions to provide a reliable connection between the positive terminal and the positive current collector structure.

### Brief Description of the Drawings

Features will become apparent to those of ordinary skill in the art by describing in detail exemplary embodiments with reference to the attached drawings in which:
- Fig. 1: illustrates a schematic view of an electric vehicle;
- Fig. 2: illustrates a sectional view of a battery module according an embodiment of the invention;
- Fig. 3: illustrates an enlarged sectional view of the battery module as shown in Fig. 2 showing the first press fit connection in detail; and
- Fig. 4: illustrates an enlarged sectional view of the battery module as shown in Fig. 2 showing the second press fit connection in detail.

### Detailed Description of the Invention

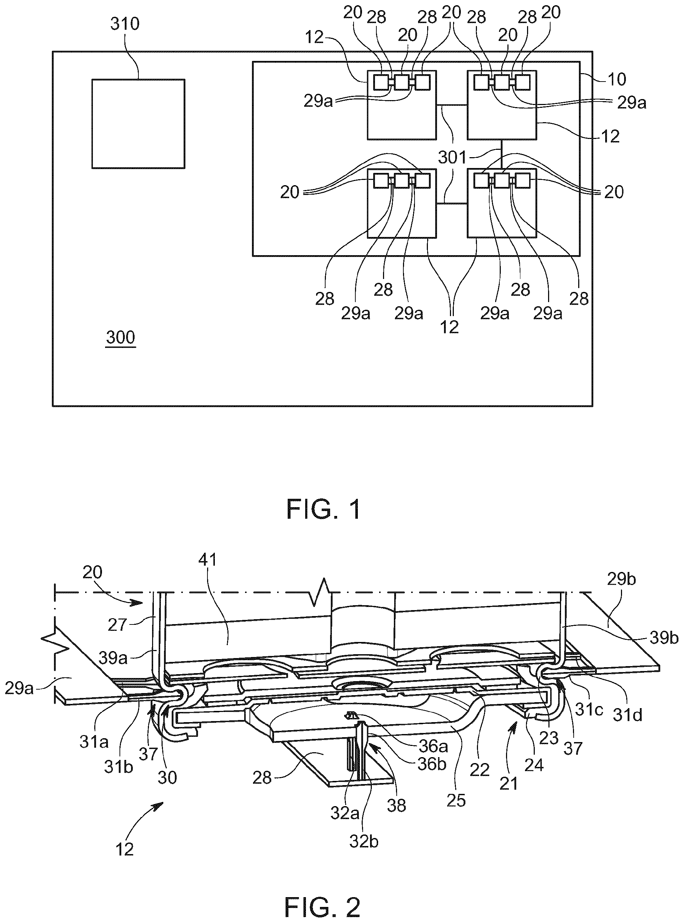

Figure 1 illustrates a schematic view of an electric vehicle 300. The electric vehicle 300 is propelled by an electric motor 310, using energy stored in rechargeable batteries arranged in a battery pack 10. The battery pack 10 is a set of any number of battery modules 12. Rechargeable batteries are used as a battery module 12 formed of a plurality of secondary battery cells 20. Components of the battery pack 10 include the individual battery modules 12, and interconnects 301, which provide electrical conductivity between battery modules 12. For simplicity, in this schematic representation, each battery module 12 is coupled to a common positive current collector structure 28 and to a common negative current collector structure 29a, i.e., in each battery pack 10, battery modules 12 are electrically coupled with each other by a common positive current collector structure 28 and by a common negative current collector structure 29a.

Figure 2 illustrates a sectional view of a battery module 12 according an embodiment of the invention. The battery module 12 comprises a plurality of secondary battery cells 20, one positive current collector structure 28, and two negative current collector structures 29a, 29b. In this sectional view, for simplicity, only one secondary battery cell 20 is shown.

The secondary battery cell 20 comprises an electrode assembly including a positive electrode, a negative electrode, and a separator interposed between the positive electrode and the negative electrode, and a spacer 41. A negative terminal 23 is electrically connected to the negative electrode and a cap-up acting as a positive terminal 25 is electrically connected to the positive electrode. A case 27 is receiving the electrode assembly. The secondary battery cell 20 further comprises a cap assembly 21 with a positive temperature coefficient fuse 22. An isolator 24 is interposed between the negative terminal 23 and the positive terminal 25.

The case 27 is adapted to form the negative terminal 23, i.e., the case 27 is preferably made of metal and the entire case 27 can function as the negative terminal 23.

The case 27 comprises a groove 30, also called nut, that is arranged along the circumference of said case 27 and the groove 30 comprises a part of the negative terminal 23, i.e., at least a part of the negative terminal 23 is arranged in the groove 30. The case 27 has a cylindrical shape and the groove 30 is a circular groove 30.

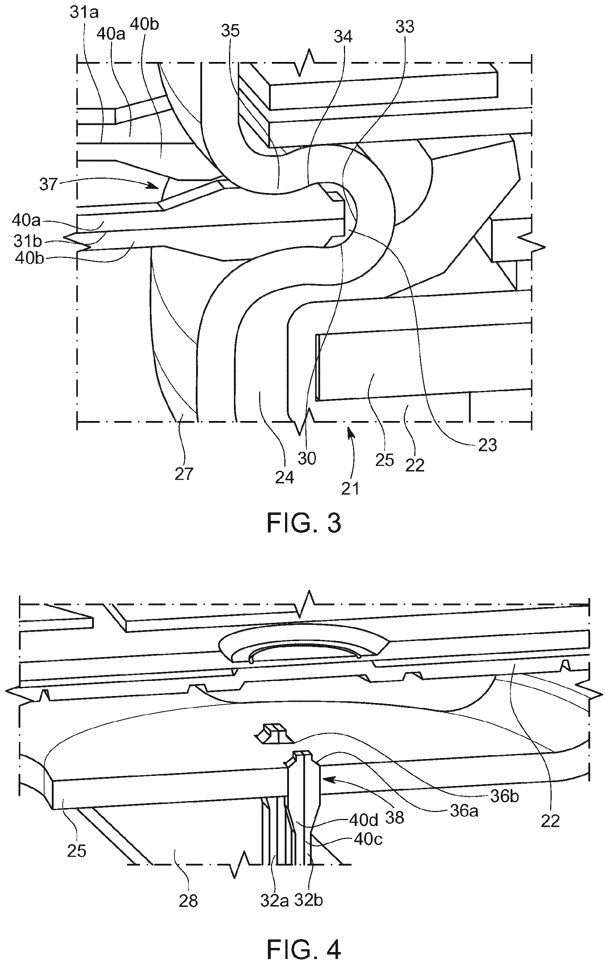

Each of the two negative current collector structures 29a, 29b interconnects the negative terminals 23 of at least two secondary battery cells 20 with each other. To interconnect the negative terminals 23 of the secondary battery cells 20, the two negative current collector structures 29a, 29b comprise four negative connection portions 31a, 31b, 31c, 31d per case 27. Each of the negative connection portions 31a, 31b, 31c, 31d projects into the groove 30 of the case 27 of one of the secondary battery cells 20 to electrically connect the negative current collector structures 29a, 29b and the negative terminal 23. The mechanical connection between each of the negative connection portions 31a, 31b, 31c, 31d and the groove 30 is realized by a first press fit connection 37 (as described further with reference to Figure 3).

The negative connection portions 31a, 31 b, 31c, 31d per case 27 are arranged pairwise on opposite lateral surface sections 39a, 39b of the case 27, i.e. one pair of negative connection portions 31a, 31b is diametrically oppositely arranged to another pair of connection portions 31c, 31d, wherein the term diametrically refers to the diameter of the cylindrical case 27. The plurality of secondary battery cells 20 is arranged between the two negative current collector structures 29a, 29b. The plurality of secondary battery cells 20 is linearly arranged, and each of the two negative current collector structures 29a, 29b extend in parallel to the linearly arranged secondary battery cells (not shown).

The positive current collector structure 28 interconnects the positive electrodes of at least two of secondary battery cells 20 with each other. To interconnect the positive electrodes and the positive current collector structure 28, the positive current collector structure 28 comprises two positive connection portions 32a, 32b and the positive terminal 25 comprises two holes 36a, 36b. In this embodiment, the holes 36a, 36b are through holes. Each of the positive connection portions 32a, 32b projects into one of said holes 36a, 36b to electrically connect the positive current collector structure 28 and the positive electrode. In this embodiment, the positive current collector structure 28 and the positive electrode are arranged at an end face of the cylindrical case 27. Each of the positive connection portions 32a, 32b is mechanically connected with one of the holes 36a, 36b by a second press fit connection 38 (as described further with reference to Figure 4).

The negative connection portions 31a, 31 b, 31c, 31d and/or the positive connection portions 32a, 32b can be called press fit pins.

Figure 3 illustrates an enlarged sectional view of the battery module 12 as shown in Figure 2 showing the first press fit connection 37 in detail.

The groove 30 of each secondary battery cell 20 comprises a base 33 and a lateral surface 34. To improve the first press fit connection 37, the lateral surface 34 comprises a protrusion 35, wherein the protrusion 35 mechanically fastens the negative connection portion 31a, 31b, 31c, 31d within the groove 30. The protrusion 35 thereby reduces the cross section of the groove 30 which can increase forces that are exerted between the negative connection portion 31a, 31b, 31c, 31d and the lateral surface 34 in the mounted state and during manufacturing of the battery module 12 when the negative connection portion 31a, 31b, 31c, 31d is pressed into the groove 30. The protrusion 35 is arranged at a lateral surface section of the lateral surface 34 distal to the base 33. I.e, with reference to the cylindrical case 27, the protrusion 35 is arranged radially outwardly so that the cross section of the groove 30 changes non-monotonically from a small cross section near the base 33, to a larger cross section between the base 33 and the protrusion 35, to a smaller cross section at the protrusion 35 to a larger cross section end of the lateral surface 34 distal to the base 33. The first press fit connection 37 is improved by the protrusion 35 and the arrangement of the protrusion 35 within the groove 30.

The negative connection portion 31a, 31b, 31c, 31d and the groove 30 are adapted to plastically deform each of the negative connection portions 31a, 31 b, 31c, 31d upon insertion of each of the negative connection portions 31a, 31b, 31c, 31d into said groove 30. Additionally or alternatively, the groove 30, i.e., the case 27, can be deformed upon insertion of each of the negative connection portions 31a, 31 b, 31c, 31d into said groove 30. The first press fit connection 37 is formed by pressing each of the negative connection portions 31a, 31b, 31c, 31d into the groove 30. Thereby, each of the negative connection portions 31a, 31b, 31c, 31d deforms plastically due to forces between the negative connection portions 31a, 31b, 31c, 31d and the lateral surface 34 and/or the protrusion 35. The first press fit connection 37 connects each of the negative connection portions 31a, 31 b, 31c, 31d and the groove 30 reliably and irreversibly.

The cross section of each of the negative connection portions 31a, 31b, 31c, 31d is preferably larger than the cross section of the groove 30 perpendicular to the direction of insertion of the negative connection portion 31a, 31b, 31c, 31d to ensure that the lateral surface 34 can exert forces to the negative connection portion 31a, 31b, 31c, 31d and to ensure that the first press fit connection 37 is achieved reliably.

Each of the negative connection portions 31a, 31b, 31c, 31d comprises two subportions 40a, 40b, wherein, in the mounted state, the subportions 40a, 40b are pressed together.

Each of the negative connection portions 31a, 31b, 31c, 31d has an elongated shape and a non-monotonically varying cross section. I.e., each of the negative connection portions 31a, 31b, 31c, 31d is longer than thick to facilitate the first press fit connection 37, and in the mounted state, each of the negative connection portions 31a, 31b, 31c, 31d has a cross section along its elongated shape so that the cross section is comparatively small proximal to the remainder of the negative current collector structure 29a, 29b, then increases so that the cross section has a maximum when contacting the protrusion 35 and decreases so that the cross section has a minimum when contacting the base 33 of the groove 30.

Figure 4 illustrates an enlarged sectional view of the battery module 12 as shown in Figure 2 showing the second press fit connection 38 in detail.

The positive connection portion 32a, 32b and the holes 36a, 36b are adapted to plastically deform each of the positive connection portions 32a, 32b upon insertion of each of the positive connection portions 32a, 32b into one of said holes 36a, 36b. Additionally or alternatively, the holes 36a, 36b, i.e., the positive electrode, can be deformed upon insertion of each of the positive connection portions 32a, 32b, 32c, 32d into said groove 30. The second press fit connection 38 is formed by pressing each of the positive connection portions 32a, 32b into one of said holes 36a, 36b. Thereby, each of the positive connection portions 32a, 32b deforms plastically due to forces between the positive connection portions 32a, 32b and the surfaces of the positive electrode forming the holes 36a, 36b. The second press fit connection 38 connects each of the positive connection portions 32a, 32b and the holes 36a, 36b reliably and irreversibly.

The cross section of each of the positive connection portions 32a, 32b is preferably larger than the diameter of the holes 36a, 36b and/or the cross section of the holes 36a, 36b perpendicular to the direction of insertion of the positive connection portion 32a, 32b to ensure that the surfaces of the holes 36a, 36b can exert forces to the positive connection portion 32a, 32b and to ensure that the second press fit connection 38 is achieved reliably.

Each of the positive connection portions 32a, 32b comprises two subportions 40c, 40d, wherein, in the mounted state, the subportions 40c, 40d are pressed together.

Each of the positive connection portions 32a, 32b has an elongated shape and a non-monotonically varying cross section. I.e., each of the positive connection portions 32a, 32b is longer than thick to facilitate the second press fit connection 38, and in the mounted state, each of the positive connection portions 32a has a cross section along its elongated shape so that the cross section is comparatively small proximal to the remainder of the positive current collector structure 28, then increases so that the cross section has a maximum when contacting the surfaces of the positive electrode, i.e., the surfaces forming the holes 36a, 36b, and decreases so that the cross section has a minimum when projected through the holes 36a, 36b.

In a non-shown embodiment, a section of the case 27 can function as the negative terminal 23. In particular, the section of the case 27 that comprises the groove 30, the groove 30 and/or a part of the groove 30, such as the lateral surface 34 and/or the base 33, can be adapted to function as the negative terminal 23. This could ensure that the negative connection portions 31a, 31b, 31c, 31d can be reliably connected to the negative terminal 23 while the remainder of the case 27 could be electrically isolating.

In another embodiment (not shown), the holes 36a, 36b can be blind holes. In this embodiment, each of the holes comprises a base as described with reference to the groove 30 in Figures 2 and 3, and the length and dimensions of the positive connection portions 32a, 32b can be similar to those of the negative connection portions 31a, 31b, 31c, 31d.

### Reference signs

- 10: battery pack
- 12: battery module
- 20: secondary battery cell
- 21: cap assembly
- 22: positive temperature coefficient fuse
- 23: negative terminal
- 24: isolator
- 25: positive terminal
- 27: case
- 28: positive current collector structure
- 29a, 29b: negative current collector structure
- 30: groove
- 31a, 31b, 31c, 31d: negative connection portion
- 32a, 32b: positive connection portion
- 33: base
- 34: lateral surface
- 35: protrusion
- 36a, 36b: hole
- 37: first press fit connection
- 38: second press fit connection
- 39a, 39b: lateral surface section
- 40a, 40b, 40c, 40d: subportions
- 41: spacer
- 300: electric vehicle
- 301: interconnects
- 310: electric motor

## Claims

1. A battery module (12) for an electric vehicle (300), comprising:
- a plurality of secondary battery cells (20), at least one positive current collector structure (28), and at least one negative current collector structure (29a, 29b); wherein
- each of the secondary battery cells (20) comprises an electrode assembly including a positive electrode, a negative electrode, and a separator interposed between the positive electrode and the negative electrode, a positive terminal (25) electrically connected to the positive electrode, a negative terminal (23) electrically connected to the negative electrode, and a case (27) receiving the electrode assembly; wherein
- the at least one positive current collector structure (28) is arranged to interconnect the positive terminals (25) of at least two of the plurality of secondary battery cells (20) with each other, and the at least one negative current collector structure (29a, 29b) is arranged to interconnect the negative terminals (23) of at least two of the plurality of secondary battery cells (20) with each other; wherein
- the case (27) of each of the plurality of secondary battery cells (20) comprises a groove (30), and the groove (30) comprises at least a part of the negative terminal (23) of the secondary battery cell (20); wherein
- the at least one negative current collector structure (29a, 29b) comprises at least one negative connection portion (31a, 31b, 31c, 31d) projecting into the groove (30) of the case (27) of at least one of the plurality of secondary battery cells (20) to electrically connect the at least one negative current collector structure (29a, 29b) and the negative terminal (23) of the at least one of the plurality of secondary battery cells (20); and wherein
- the at least one negative connection portion (31a, 31b, 31c, 31d) and the groove (30) are mechanically connected with each other by a first press fit connection (37), and/or the positive terminal (25) of the at least one of the plurality of secondary battery cells (20) comprises a hole (36a, 36b), wherein the at least one positive current collector structure (28) comprises at least one positive connection portion (32a, 32b) projecting into the hole (36a, 36b) to electrically connect the at least one positive current collector structure (28) and the positive terminal (25), wherein the at least one positive connection portion (32a, 32b) and the hole (36a, 36b) are mechanically connected with each other by a second press fit connection (38).

2. The battery module (12) as claimed in claim 1, wherein
- the groove (30) comprises a base (33) and a lateral surface (34), wherein the lateral surface (34) comprises a protrusion (35), wherein the protrusion (35) is arranged to mechanically fasten the at least one negative connection portion (31a, 31b, 31c, 31d) within the groove (30).

3. The battery module (12) as claimed in any one of the preceding claims, wherein
- the at least one negative connection portion (31a, 31b, 31c, 31d) and/or the groove (30) is adapted to plastically deform the at least one negative connection portion (31a, 31b, 31c, 31d) upon insertion of the at least one negative connection portion (31a, 31b, 31c, 31d) into the groove (30).

4. The battery module (12) as claimed in any one of the preceding claims, wherein
- the case (27) of each of the plurality of secondary battery cells (20) has a cylindrical shape, and the groove (30) and the negative terminal (23) of the case (27) are arranged along the circumference of the case (27).

5. The battery module (12) as claimed in any one of the preceding claims, wherein
- the at least one negative current collector structure (29a, 29b) comprises at least two, preferably at least four, negative connection portions (31a, 31b, 31c, 31d) per case (27).

6. The battery module (12) as claimed in claim 5, wherein
- at least two negative connection portions (31a, 31 b, 31c, 31d) per case (27) are arranged on opposite lateral surface sections (39a, 39b) of the case (27).

7. The battery module (12) as claimed in any one of the preceding claims, wherein
- the battery module (12) comprises two negative current collector structures (29a, 29b), wherein each of the negative current collector structures (29a, 29b) comprises at least one negative connection portion (31a, 31b, 31c, 31d); and wherein
- the plurality of secondary battery cells (20) is arranged between the two negative current collector structures (29a, 29b).

8. The battery module (12) as claimed in claim 7, wherein
- the plurality of secondary battery cells (20) is linearly arranged, and each of the two negative current collector structures (29a, 29b) extends in parallel to the linearly arranged secondary battery cells (20).

9. The battery module (12) as claimed in any one of the preceding claims, wherein
- the negative connection portion (31a, 31b, 31c, 31d) comprises at least two subportions (40a, 40b), wherein, in the mounted state, the subportions (40a, 40b) are pressed together; and/or
- the at least one positive current collector structure (28) comprises at least one positive connection portion (32a, 32b), wherein the at least one positive connection portion (32a, 32b) comprises at least two subportions (40c, 40d), wherein, in the mounted state, the subportions (40c, 40d) are pressed together.

10. The battery module (12) as claimed in any one of the preceding claims, wherein
- the negative connection portion (31a, 31b, 31c, 31d) has an elongated shape and a non-monotonically varying cross section, and/or
- the at least one positive current collector structure (28) comprises at least one positive connection portion (32a, 32b), wherein the at least one positive connection portion (32, 32b) has an elongated shape and a non-monotonically varying cross section.

11. The battery module (12) as claimed in any one of the preceding claims, wherein
- each of the positive terminals (25) of the plurality of secondary battery cells (20) comprises two or more holes (36a, 36b), and the at least one positive current collector structure (28) comprises two or more positive connection portions (32a, 32b).

12. A battery pack (10), comprising:
- a plurality of battery modules (12) as claimed in any one of the preceding claims and interconnects (301) to connect the battery modules (12) with each other.

13. An electric vehicle (300) comprising a battery pack (10) according to claim 12.

14. A method of mounting a battery module (12), comprising the following steps:
- providing a plurality of secondary battery cells (20), at least one positive current collector structure (28), and at least one negative current collector structure (29a, 29b); wherein each of the secondary battery cells (20) comprises an electrode assembly including a positive electrode, a negative electrode, and a separator interposed between the positive electrode and the negative electrode, a positive terminal (25) electrically connected to the positive electrode, a negative terminal (23) electrically connected to the negative electrode, and a case (27) receiving the electrode assembly; wherein the at least one positive current collector structure (28) is arranged to interconnect the positive terminals (25) of at least two of the plurality of secondary battery cells (20) with each other, and the at least one negative current collector structure (29a, 29b) is arranged to interconnect the negative terminals (23) of the at least two of the plurality of secondary battery cells (20) with each other; wherein the case (27) of each of the plurality of secondary battery cells (20) comprises a groove (30), and the groove (30) comprises at least a part of the negative terminal (23); and wherein the at least one negative current collector structure (29a, 29b) comprises at least one negative connection portion (31a, 31b, 31c, 31d) projecting into the groove (30) to electrically connect the at least one negative current collector structure (29a, 29b) and the negative terminal (23);
- mechanically connecting the at least one negative connection portion (31a, 31b, 31c, 31d) and the groove (30) with each other by pressing the at least one negative connection portion (31a, 31b, 31c, 31d) into the groove (30) to form a first press fit connection (37).

15. A method of mounting a battery module (12), comprising the following steps:
- providing a plurality of secondary battery cells (20), at least one positive current collector structure (28), and at least one negative current collector structure (29a, 29b); wherein each of the secondary battery cells (20) comprises an electrode assembly including a positive electrode, a negative electrode, and a separator interposed between the positive electrode and the negative electrode, a positive terminal (25) electrically connected to the positive electrode, a negative terminal (23) electrically connected to the negative electrode, and a case (27) receiving the electrode assembly; wherein the at least one positive current collector structure (28) is arranged to interconnect the positive terminals (25) of at least two of the plurality of secondary battery cells (20) with each other, and the at least one negative current collector structure (29a, 29b) is arranged to interconnect the negative terminals (23) of the at least two of the plurality of secondary battery cells (20) with each other; wherein the case (27) of each of the plurality of secondary battery cells (20) comprises a groove (30), and the groove (30) comprises at least a part of the negative terminal (23); wherein the at least one negative current collector structure (29a, 29b) comprises at least one negative connection portion (31a, 31b, 31c, 31d) projecting into the groove (30) to electrically connect the at least one negative current collector structure (29a, 29b) and the negative terminal (23); and wherein the positive terminal (25) comprises a hole (36a, 36b), wherein the at least one positive current collector structure (28) comprises at least one positive connection portion (32a, 32b) projecting into the hole (36a, 36b) to electrically connect the at least one positive current collector structure (28) and the positive terminal (25),
- mechanically connecting the at least one positive connection portion (32a, 32b) and the hole (36a, 36b) with each other by pressing the at least one positive connection portion (32a, 32b) into and/or through the hole (36a, 36b) to form a second press fit connection (38).
